# EUROPEAN PATENT SPECIFICATION

(11) **EP 2 483 959 B1**
(45) Date of publication and mention of the grant of the patent: **11.02.2015**
(21) Application number: 10818437.5
(22) Date of filing: 21.09.2010
(51) Int. Cl.: H01M 8/10

(54) **METHOD OF OPERATING A DIRECT DME FUEL CELL SYSTEM**
VERFAHREN ZUM BETREIBEN EINES DIREKTEN DME-BRENNSTOFFZELLENSYSTEMS
PROCÉDÉ DE FONCTIONNEMENT D'UN SYSTÈME À PILE À COMBUSTIBLE À DME DIRECT

(30) Priority: 25.09.2009 EP 09171384; 25.09.2009 US 245708 P
(43) Date of publication of application: 08.08.2012
(73) Proprietor: Danmarks Tekniske Universitet - DTU, 2800 Kongens Lyngby (DK)
(72) Inventor: JENSEN, Jens Oluf, DK-2500 Valby (DK); LI, Qingfeng, DK-2660 Brøndby Strand (DK); BJERRUM, Niels J., DK-2920 Charlottenlund (DK); STEENBERG, Thomas, DK-4000 Roskilde (DK)
(74) Representative: Hjelmencrantz, Anders
(86) International application number: PCT/DK2010/050239
(87) International publication number: WO 2011/035784

(56) References cited:
- JP-A- 2009 048 992
- US-A1- 2004 247 992
- US-A1- 2008 241 616
- UEDA S ET AL: "Electrochemical characteristics of direct dimethyl ether fuel cells", SOLID STATE IONICS, NORTH HOLLAND PUB. COMPANY. AMSTERDAM; NL, NL, vol. 177, no. 19-25, 15 October 2006 (2006-10-15), pages 2175-2178, XP025033856, ISSN: 0167-2738 [retrieved on 2006-10-15]
- WANG J T ET AL: "Trimethoxymethane as an alternative fuel for a direct oxidation PBI polymer electrolyte fuel cell", ELECTROCHIMICA ACTA, ELSEVIER SCIENCE PUBLISHERS, BARKING, GB, vol. 43, no. 24, 21 August 1998 (1998-08-21), pages 3821-3828, XP004137740, ISSN: 0013-4686
- QINGFENG L ET AL: "PHOSPHORIC ACID DOPED POLYBENZIMIDAZOLE MEMBRANES: PHYSIOCHEMICAL CHARACTERIZATION AND FUEL CELL APPLICATIONS", JOURNAL OF APPLIED ELECTROCHEMISTRY, SPRINGER, DORDRECHT, NL, vol. 31, 1 January 2001 (2001-01-01), pages 773-779, XP008018028, ISSN: 0021-891X
- LI Q ET AL: "High temperature proton exchange membranes based on polybenzimidazoles for fuel cells", PROGRESS IN POLYMER SCIENCE, PERGAMON PRESS, OXFORD, GB, vol. 34, no. 5, 1 May 2009 (2009-05-01), pages 449-477, XP026073444, ISSN: 0079-6700 [retrieved on 2009-02-07]
- YU J.-H. ET AL: 'Performance of direct dimethyl ether fuel cells at low temperature' ELECTROCHEMISTRY COMMUNICATIONS vol. 7, 02 November 2005, pages 1385 - 1388, XP005181057
- XIAO L. ET AL: 'High-Temperature Polybenzimidazole Fuel Cell Membranes via a Sol-Gel Process' CHEMISTRY OF MATERIALS vol. 17, 21 September 2005, pages 5328 - 5333, XP002483716

## Description

### Technical field

The present invention relates to a method of operating a fuel cell system.

### Background of the invention

Fuel cells are currently viewed as promising energy conversion systems that may replace traditional, less efficient power generation technology. Fuel cells convert the chemical energy of a given fuel directly into electrical energy leading to a higher degree of efficiency as compared to power generation employing a conventional heating cycle. Furthermore, fuel cells generally have no moving mechanical parts, thereby reducing operational noise levels. Consequently, fuel cell systems are today feasible for a large range of industrial applications. Although often still used at demonstration level, fuel cell technology is on the verge of becoming a competitive alternative to traditional power generation.

Among the different types of fuel cells, proton exchange membrane fuel cells (PEMFC) have received considerable attention. The proton exchange membrane is a good electronic insulator, but allows transfer of H⁺ ions, or protons, from the anode to the cathode of a PEMFC. Typically, the membranes for PEMFCs consist of perfluorosulfonic acid polymers such as Nafion® (Dupont). Nafion®-based membranes exhibit proton conductivies that are highly dependent on their water content. Therefore, drying out of the membrane especially at the anode side has to be avoided by adequate water management, for example by using humidified fuel gas. For the same reason, use of Nafion® membranes is usually limited to an operating temperature of up to 80 °C at atmospheric pressure.

A typical way of operating a PEMFC is to supply molecular hydrogen, H₂, to the anode for oxidation, while air or pure oxygen is used as oxidant at the cathode. Protons released from H₂ are transferred to the cathode to react with molecular oxygen, O₂, which is reduced by the electrons that generate the electrical energy. The product of this reaction is water, H₂O. Hydrogen for this type of PEMFC is often provided by reforming of carbon containing fuels, for example by steam reforming of methanol. This requires suitable fuel processing installations including a reformer. PEMFC systems based on H₂ as fuel are typically operated at a temperature of 50-90 °C.

An alternative way of operating PEMFCs is by directly oxidising methanol at the anode. This is referred to as a direct methanol fuel cell (DMFC). The main advantage of this approach is that the reforming step is no longer necessary since methanol is directly oxidised to CO₂ at the anode, typically via adsorbed intermediates. A typical DMFC is fed with a liquid methanol-water mixture at temperatures of up to 80 °C. A major problem of methanol-driven fuel cells is diffusion of methanol through the proton exchange membrane. This fuel crossover may lead to oxidation of methanol at the cathode and resulting loss of voltage and overall performance. For reducing fuel crossover, DMFCs are typically operated with a liquid fuel stream consisting of methanol and water, wherein methanol is added at comparatively small quantities to a large excess of water. In addition, methanol is toxic.

An interesting alternative fuel for powering fuel cells is dimethyl ether (DME). The physical properties of DME are comparable to those of liquefied petroleum gases such as propane or butane. DME is non-toxic and non-carcinogenic, has a comparatively low global warming potential, and typically lies in the same price range as gasoline, diesel or methanol. In contrast to diesel, combustion of DME does not produce soot. DME can be produced from syngas, coal or biomass, and is easily liquefied, transported and stored. DME has an energy density that is higher than the energy density of methanol, both on a gravimetric and on a volumetric basis.

When used in fuel cell technology, DME is usually converted to hydrogen by steam reforming. The reaction proceeds in two steps, where DME is first hydrolysed to methanol followed by methanol steam reforming yielding hydrogen and carbon dioxide. This process requires energy and the utilization of special catalysts, thereby increasing complexity and cost. Another problem of DME reforming, or reforming of any carbon-containing fuel, is the presence of carbon monoxide, CO, which can poison Pt catalysts already at concentrations of a few tens of ppm.

Therefore, it would be desirable to operate a DME-based fuel cell in a way that obviates DME reforming. Furthermore, impurities found in fuels, such as CO, constitute a major problem for fuel cell performance particularly at temperatures below 100 °C. Increasing the operating temperature to values above 100 °C would accordingly help increase electrode tolerance to fuel impurities. In addition, high operating temperatures typically result in better kinetics of DME oxidation within the fuel cell. In addition, temperatures above 100 °C simplify water management since water is exclusively present in the gas phase. Moreover, the need for water management as such could be obviated by using a membrane electrolyte where the proton conductivity is not dependent on a high water concentration as contrasted to conventional PEM fuel cells.

Cai et al. (Cai, K., Yin, G, Lu, L, Gao, Y., 2008, Comparative investigation of dimethyl ether gas and solution as fuel under direct fuel cells. Electrochemical and Solid-State Letters, 11 (11), B205-B207) provide a direct DME fuel cell with a solid polymer membrane consisting of Nafion® 115. The fuel cell is operated at 80 °C. Cai et al. recommend the use of a liquid aqueous solution of DME rather than using humidified DME gas due to the greatly decreased ion conductivity of the membrane when using the gaseous fuel mixture. Thus, mixing of the two phases, liquid water and gaseous DME, is required.

Ueda et al. (Ueda, S., Eguchi, M., Uno, K., Tsutsumi, Y., Ogawa, N., 2006, Electrochemical characteristics of direct dimethyl ether fuel cells. Solid State Ionics, 177, 2175-2178*)* likewise describe a direct DME fuel cell employing Nafion® 117 as membrane electrolyte. The maximum operation temperature is 95 °C.

U.S. Patent No. 6,777,116 B1 (Müller et al.) provides a fuel cell system operating directly on DME. The fuel cells employ Nafion® 117 as membrane electrolyte. A maximum operation temperature of 125 °C is demonstrated for the fuel cell system. However, the fuel stream used at this maximum operation temperature is an aqueous solution of DME supplied at an absolute pressure of 5 bar. This considerable overpressure is necessary for preventing drying out of the membrane. Hence, an additional challenge of this approach is the engineering of a fuel cell system that can tolerate and maintain these high overpressures.

The limitations in operation temperature of the above-described systems are most likely due to the aforementioned temperature limitations of perfluorosulfonic-acid-based membranes such as Nafion®.

Heo et al. (Heo, P., Nagao, M., Sano, M., Hibino, T., 2008, Direct dimethyl ether fuel cells at intermediate temperatures. Journal of The Electrochemical Society, 155(1) B92-B95*)* and Heo (Heo, P., 2008, Intermediate-temperature fuel cells using a proton-conducting Sn0.9In0.1P2O7 Electrolyte. Doctor of Engineering, Graduate School of Environmental Studies, Nagoyz University) describe direct DME fuel cells operated at a temperature range of between 150 and 300 °C. An anhydrous, inorganic proton exchange membrane of the composition Sn_{0.9}In_{0.1}P₂O₇ is employed for producing a non-polymeric proton exchange membrane with a relatively large thickness of 1 mm. The best performance of this system is observed at temperatures above 200 °C.

However, operating a fuel cell at that high a temperature requires specialised bipolar plate materials and sealing materials thereby increasing costs and potentially shortening the lifetime of the fuel cell system. Furthermore, inorganic electrolyte materials such as Sn_{0.9}In_{0.1}P₂O₇ tend to be brittle, thereby complicating the production of thin membranes in the range of 50-100 µm. Another disadvantage of inorganic membranes is their considerable manufacturing cost.

Consequently, it is a first object of the present invention to provide a method of direct DME fuel cell operation that results in improved kinetics of DME oxidation.

It is a second object of the present invention to provide a method of direct DME fuel cell operation that results in an increased tolerance to fuel impurities.

It is a third object of the present invention to provide a method of direct DME fuel cell operation that improves the provision of a DME/water mixture for supply to the anode.

It is a fourth object of the present invention to provide a method of direct DME fuel cell operation that is cost-efficient.

It is a fifth object of the present invention to provide a method of direct DME fuel cell operation that ensures a prolonged lifetime of the fuel cell system.

It is a sixth object of the present invention to provide a method of direct DME fuel cell operation that simplifies water management of the fuel cell system.

It is a seventh object of the present invention to provide a method of direct DME fuel cell operation that reduces fuel crossover.

### Definitions:

The term "PEM single cell" as used herein refers to a single fuel cell comprising an anode, a cathode and a proton exchange membrane. A PEM single cell may also be referred to as a membrane-electrode assembly (MEA). It may further comprise one or more catalysts loaded on the electrodes or directly on the membrane.

The term "fuel cell system" as used herein refers to a system comprising one or more electrically connected PEM single cells, such as a stack of fuel cells, wherein the fuel cell system may comprise one or more gas inlets, gas outlets, gas manifolds, flow field plates, electrically insulating frames and interconnector plates. The fuel cell system may further comprise external tubing, valves, compressors, power electronics, control electronics and/or additional supporting or auxiliary components.

As used herein, the term "polybenzimidazole" (PBI) refers to aromatic heterocyclic polymers containing benzimidazole units. PBI with different structures can be synthesized from different combinations of tetraamines and diacids or alternatively combined diamine acids. An example compound comprised by the term "polybenzimidazole" is poly 2,2'-*m*-(phenylene)-5,5'-bibenzimidazole, also known as *m*PBI, which is, for example, comprised in the commercial product Celazole®.

The term "acid-doping level" as used herein refers to the ratio of moles of acid to moles of polymer repeat unit.

Weight ratios given as percentage "w/w" always refer to the dry weight as reference.

As used herein, the term "equivalence ratio" relates to the ratio of the actual oxidant/fuel ratio to the stoichiometric oxidant/fuel ratio. Oxidant/fuel ratios are expressed as number of moles of oxidant per number of moles of fuel. The oxidant may, for example, be molecular oxygen, O₂.

### Summary of the invention

The present invention provides a new and unique method of operating a fuel cell system comprising one or more fuel cells of the type comprising a cathode and an anode each comprising catalyst means, and a proton exchange membrane, wherein the membrane is composed of a polymeric material comprising acid-doped polybenzimidazole (PBI), the method comprising adjusting the operating temperature of the fuel cell to between 120 and 250 °C, supplying an oxidant stream to the cathode, and supplying a humidified fuel stream to the anode, said fuel stream comprising dimethyl ether, wherein dimethyl ether is directly oxidised at the anode and the molar ratio of water and dimethyl ether in the gaseous mixture of the humidified fuel stream is between 3.5 and 7.5.

This unique combination of features has surprisingly been shown to address one or more of the above-mentioned objects of the invention.

### Brief description of figures

The invention is explained in greater detail below with reference to the accompanying drawings.

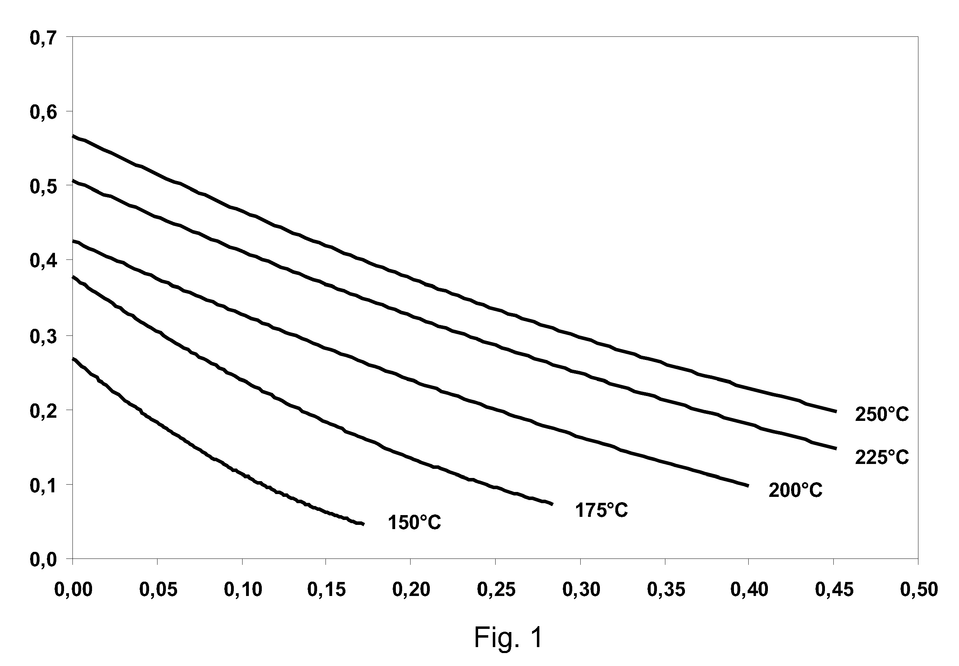

Fig. 1 shows the polarisation curves of a fuel cell operated according to the method of the present invention. The different curves represent experiments carried out at selected temperatures from 150 to 250 °C. The primary axis represents current density (Acm⁻²) and the secondary axis (ordinate) represents cell voltage (V).

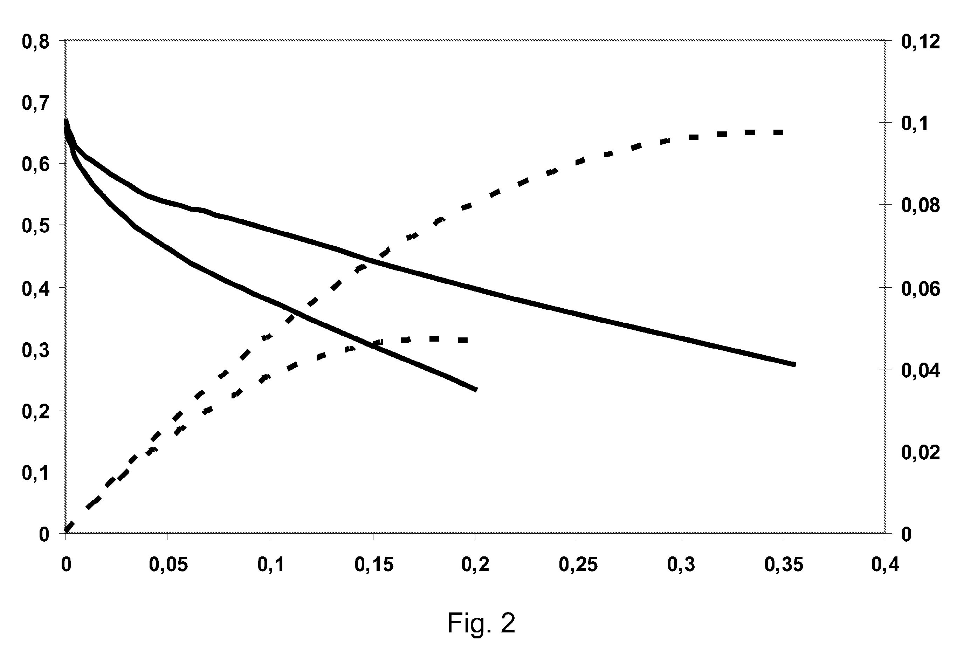

Fig. 2 shows the cell voltage (V; solid curves) and the power density (Wcm⁻², dashed curves), respectively, plotted against the current density (Acm⁻²) of a fuel cell operated according to the method of the present invention. The primary axis represents current density (Acm⁻²), the left secondary axis (ordinate) represents cell voltage (V), and the right secondary axis (ordinate) represents power density (Wcm⁻²). The upper solid curve and the upper dashed curve represent measured maximum values, whereas the respective lower curves represent measured average values.

### Detailed description of the invention

A fuel cell system suitable for application of the method of the present invention may comprise a fuel cell stack composed of a plurality of electrically interconnected fuel cells. Each fuel cell may have an MEA comprising a polymeric proton exchange membrane sandwiched between a cathode and an anode. The electrodes are advantageously porous and may comprise a carbon backbone loaded with a catalyst. Suitable catalysts include platinum, binary Pt-Ru mixtures and ternary systems such as Pt-Ru-Sn. Typical catalyst loadings are in the range of 0.5-5.0 mg/cm². Interconnector plates comprising, for example, graphite and/or stainless steel may provide electrical contact between adjacent MEAs.

The proton exchange membrane used in the method of the present invention comprises acid-doped PBI, which is a high-quality, cost-efficient alternative to inorganic ceramic membrane materials. Also, the use of acid-doped PBI allows for operation of the fuel cell systems at temperatures well above 120 °C without the need for pressurisation or active water management in contrast to perfluorosulfonic acid polymers. According to the present invention, acid-doped PBI was furthermore surprisingly found to considerably reduce fuel crossover during fuel cell operation with DME as fuel.

The proton exchange membrane according to the present invention may comprise PBI blends, cross-linked PBI, PBI composites and modified types of PBI such as *para*-PBI (Poly[2,2'-*p*-(phenylene)-5,5'-bibenzimidazole]), pyridine-based PBI, AB-PBI (Poly[2,5-polybenzimidazole]), naphthalin-PBI (poly[2,2'-(2,6-naphthalin)-5,5'-bibenzimidazole]), Py-PBI (poly[2,2'-(2,6-pyridin)-5,5'-bibenzimidazole]), Py-O-PBI, OO-PBI, OSO₂-PBI, Dihydroxy-PBI, hexafluoro PBI (F₆-PBI), *tert*-butyl PBI, N-substituted PBI, such as poly(*N*-methylbenzimidazole) or poly(*N*-ethylbenzimidazole), sulphonated PBI, or any other polymer capable of proton conduction at temperatures above 120 °C with or without acid or base doping.

The temperature range of 120 to 250 °C allows for an efficient direct oxidation of dimethyl ether at the anode as compared to previous systems. Another advantage of operation at temperatures above the boiling point of water is that both dimethyl ether and water are present as gaseous phases, which are readily miscible with each other at any ratio. In addition, higher operating temperatures increase the electrode tolerance to fuel impurities. For example at temperatures above 150 °C, a fuel cell system operated according to the method of the present invention may tolerate up to 1% CO and 10 ppm SO₂ in the fuel stream.

The two half reactions taking place in a single cell according to the method of the present inventions may be summarised as follows:
Anode: (CH₃)₂O + 3 H₂O → 2 CO₂ + 12 H⁺ + 12 e⁻
Cathode: 12 H⁺ + 12 e⁻ + 3 O₂ → 6 H₂O

The oxidation of DME to CO₂ at the anode typically takes place via a number of intermediate reactions.

The fuel stream may optionally comprise additional fuels such as methanol, formic acid or hydrogen.

The acid used for producing acid-doped PBI may be phosphoric acid or other acids with a vapour pressure comparable to or lower than phosphoric acid, and which are thermally stable at the fule cell operating temperature. Another example of a suitable acid is phosphotungstic acid (PTA).

According to a preferred embodiment of the method of the present invention, the acid is phosphoric acid. A PEM membrane comprising phosphoric acid-based PBI is particularly suitable in terms of proton conductivity and long-term stability for fuel cell operation according to the present invention. The membrane material may, for example, be produced by doping with a solution of 85% phosphoric acid. Phosphoric acid doped PBI exhibits an excellent conductivity and stability at the temperature range employed in the method of the present invention. The membrane may also be manufactured by so called "direct casting" in which process the membrane is cast together with phosphoric acid without subsequent doping.

According to another embodiment of the method of the present invention, the polymeric material comprises at least 90% w/w of acid-doped polybenzimidazole. A PEM membrane comprising this high amount of acid-doped PBI shows high proton conductivity, long lifetime and is easy to handle. More preferably, the polymeric material comprises at least 95% w/w of acid-doped polybenzimidazole. Most preferably, the polymeric material exclusively consists of acid-doped polybenzimidazole.

According to another embodiment of the present invention, the polymeric material consists of 50-90%, more preferably 60-80%, most preferably 70% w/w acid-doped PBI and 10-50%, more preferably 20-40%, most preferably 30% w/w of a sulfonated acidic polymer. In this polymer blend, PBI can be doped to a level of between 11 and 13 without sacrificing the blend's tensile strength.

According to the method of the present invention, the humidified fuel stream is a gaseous mixture consisting of water and dimethyl ether. This constitutes a particularly simple and cost-effective solution. Vapours of water and dimethyl ethers may be mixed at the desired ratio and fed to the fuel cell system. Advantageously, liquid water is first heated to produce water vapour, which subsequently can be mixed with gaseous dimethyl ether. The gaseous mixture may be further heated, for example to the operation temperature of the fuel cell system.

According to a preferred embodiment of the method of the present invention, the operating temperature is between 120 and 200 °C. This constitutes an advantageous temperature interval in which fuel cell performance and lifetime are balanced in a satisfactory way.

According to another embodiment of the method of the present invention, the operating temperature is above 125 and below 150 °C. It was found that this operational temperature range results in a particularly long lifetime of the fuel cell system.

According to the method of the present invention, the fuel stream contains water and dimethyl ether at a molar ratio of between 3.5 to 7.5. This stoichiometric excess of water was found to increase the performance of the fuel cell, most likely due to increased conductivity of the proton exchange membrane and a higher rate and degree of DME conversion. As outlined above, the reaction at the anode requires three moles of water for each mole of dimethyl ether, which corresponds to the stoichiometric ratio and to a molar ratio of 3.

According to another embodiment of the method of the present invention, the flow rates of the oxidant stream and the fuel stream are adjusted to create an equivalence ratio of between 1.1 and 1.5. Accordingly, the oxidant, for example O₂ in air, is supplied to the cathode overstoichiometrically, that is, at an oxidant/fuel ratio slightly higher than the stoichiometric oxidant/fuel ratio, resulting in an equivalence ratio of between 1.1 to 1.5. As outlined above, the oxidation of one mole of dimethyl ether requires the use of three moles of O₂. Hence, the stoichiometric oxidant/fuel ratio for this reaction is 3. Assuming that the oxidant stream contains ambient air with 20 mol% of O₂ and that the humidified fuel stream contains 50 mol% of dimethyl ether, an equivalence ratio of 1 is reached when adjusting the respective flow rates of air stream and fuel stream, expressed for example in moles per minute, to a ratio of 7.5 to 1. In that case, the actual oxidant/fuel ratio is 3.

According to yet another embodiment of the method of the present invention, the anode catalyst means comprise a platinum/ruthenium catalyst. In this context, platinum may also refer to platinum alloys. Here, platinum is the main catalyst for DME oxidation while Ruthenium helps removing CO formed during DME oxidation. Hence, this type of anode catalyst is advantageous with respect to a high electrode tolerance against fuel impurities.

According to another embodiment of the method of the present invention, the acid-doped PBI has a proton conductivity of at least 10⁻³ S cm⁻¹ at 150 °C and at a relative humidity of 5%. The proton conductivity of acid-doped PBI may be varied by choosing different types of PBI, by varying the acid used for doping, or by varying the acid-doping level. A proton conductivity of at least 10⁻³ S cm⁻¹ at 150 °C and at a relative humidity of 5%, was found to yield an advantageous performance of the fuel cell system operated with the method of the present invention.

According to another embodiment of the method of the present invention, the acid-doped PBI has an acid-doping level of 2 or higher. Hereby, a particularly high proton conductivity of the proton exchange membrane is ensured. Preferably, the acid-doping level is higher than what it takes to neutralize the basic sites of the polymer. Preferably, the acid-doping level is between 6 and 14.

According to yet another embodiment of the method of the present invention, unreacted dimethyl ether is recirculated within the fuel cell system. This increases the system's degree of efficiency. This step may, for example, be achieved by detecting the gaseous concentration of dimethyl ether at a gas outlet downstream the anode. If dimethyl ether is present at a concentration above a pre-determined threshold the gas may partly or in total be re-directed to an inlet placed upstream the anode. The offgas from the anode may be directed into a reservoir with liquid water, the latter of which is used for producing water vapour that is mixed with fresh DME. In that way, all or part of the excess DME as well as the water present in the offgas may be recycled. Recirculation of unreacted dimethyl ether may be particularly relevant at fuel cell start-up when fuel and oxidant turnover is not yet optimal. Alternatively or in addition, unreacted or partly reacted fuel may be combusted in a catalytic or flame burner. According to another embodiment of the method of the present invention, waste heat of the fuel cell system is used to preheat and/or vaporise water and/or dimethyl ether for the humidified fuel stream. Since the fuel cell system is operated at a temperature well above the boiling point of water, waste heat may advantageously be used in this way, reducing operation costs and improving efficiency.

In a preferred embodiment of the method of the present invention, the humidified fuel stream is supplied at a gauge pressure of 0 - 50 kPag. As will be appreciated by the skilled artisan a gauge pressure of zero corresponds to the ambient pressure. By maintaining the pressure of the humidified fuel stream relatively close to ambient pressure, several advantageous effects are achieved. First, leakage of fuel to the outside of the fuel cell system is minimized. In addition, the requirements that have to be met in terms of material stability, gas-tightness and the like are more easily achievable as compared to high-pressure systems of the prior art. This reduces complexity and costs, and extends the lifetime of the fuel cell system.

The method according to the present invention may be used for numerous transportation or stationary applications such as portable electronics, auxiliary power units, automotive technology, uninterruptable power supplies, or stand-alone power devices.

### Examples

### Example 1: Preparation of membrane electrode assembly

The electrodes, a PtRu/C anode and a Pt/C cathode, were produced by tape-casting. A carbon paper anode was loaded by use of a 60% 2:1 Pt-Ru catalyst powder (Platinum, nominally 40%, Ruthenium, nominally 20% on carbon black; Alfa Aesar GmbH & Co KG) added to a PBI solution (4% wt in *N*,*N*-dimethylacetamide, DMAc) using amounts resulting in a loading of 1.5 mg Pt-Ru per cm² and 0.3 mg PBI per cm². A carbon paper cathode was loaded by use of a 38.6% Pt catalyst (powder, prepared by reduction of Pt from a hexacloroplatinate solution) added to a PBI solution (4% wt in *N,N-*dimethylacetamide, DMAc) using amounts resulting in a loading of 0.7 mg Pt per cm² and 0.3 mg PBI per cm². After drying, doping of PBI was performed using a phosphoric acid solution for establishing an acid doping level of 6.

The MEA was obtained by hotpressing the electrodes on either side of a phosphoric-acid-doped PBI membrane produced by solution casting (acid doping: 6, thickness: 50 µm) for 7 minutes at 150 °C with a pressure of 100 kg per cm². The MEA was placed into a frame with suitable gas inlets, outlets and channels. Dimethyl ether (99.9%; Gerling Holz & Co Handels GmbH) was mixed with water vapour to produce a humidified fuel stream that was fed to the anode. Unhumidified air was used as oxidant stream. Heaters within the cell were used for establishing temperatures between 150 and 250 °C.

### Example 2: Performance at different temperatures

Polarisation curves were obtained at 150, 175, 200, 225 and 250 °C. Peak power densities at different temperatures are shown in table 1.

**Table 1**

| Temperature (°C) | Maximum power density (mW/cm²) |
|---|---|
| 150 | 12 |
| 175 | 29 |
| 200 | 52 |
| 225 | 78 |
| 250 | 96 |

At 200 °C, the cell had the lowest ohmic resistance. At temperatures of 200 °C or above, the ohmic loss remains constant. After an operating time of one hour, the maximum power densities were further increased to values of about 100 mW/cm² at 200 °C and at an equivalence ratio of between 1.1 and 1.5. Open circuit voltages (OCVs) were about 0.7 V.

Exemplary polarisation curves are shown in Figs. 1 and 2, where Fig. 1 shows results from an early experiment and Fig. 2 shows test results from a later experiment.

### Example 3: Membrane crossover of DME and methanol

Air was evacuated from a first gas chamber and to a second gas chamber separated from each other by a phosphoric-acid-doped PBI membrane (acid doping: 6, thickness: 50 µm). The resulting absolute pressure inside both chambers was below 20 mbar. Subsequently, either gaseous methanol or DME was injected into the first gas chamber. The starting pressure of DME was 4 bar, and the starting pressure for methanol was 6 bar. The rate of gas transport across the membrane was determined by recording the pressure build up in the second gas chamber over time.

The membrane permeabilities were calculated as 7.4 * 10⁻⁹ mol cm⁻¹ s⁻¹ bar⁻¹ for DME and 10.4 * 10⁻⁹ mol cm⁻¹ s⁻¹ bar⁻¹ for methanol. Thus, methanol diffuses through the membrane at a rate that is about 40% higher than the rate of DME diffusion.

The specific details mentioned in the foregoing examples should not be used to limit the invention hereto.

## Claims

1. A method of operating a fuel cell system comprising one or more fuel cells of the type comprising a cathode and an anode each comprising catalyst means, and a proton exchange membrane, wherein the membrane is composed of a polymeric material comprising acid-doped polybenzimidazole (PBI), the method comprising
- adjusting the operating temperature of the fuel cell to between 120 and 250 °C,
- supplying an oxidant stream to the cathode, and
- supplying a humidified fuel stream to the anode, said fuel stream comprising dimethyl ether, wherein dimethyl ether is directly oxidised at the anode, wherein the humidified fuel stream is a gaseous mixture consisting of water and dimethyl ether,
and wherein the fuel stream contains water and dimethyl ether at a molar ratio of between 3.5 to 7.5.

2. A method according to claim 1 wherein the acid is phosphoric acid.

3. A method according to any one of the preceding claims, wherein the polymeric material consists of 50-90% w/w acid-doped PBI and 10-50% w/w of a sulfonated acidic polymer.

4. A method according to any one of the preceding claims wherein the operating temperature is between 120 and 200 ºC.

5. A method according to any one of the preceding claims wherein the operating temperature is above 125 and below 150 ºC.

6. A method according to any one of the preceding claims wherein the flow rates of the oxidant stream and the fuel stream are adjusted to create an equivalence ratio of between 1.1 and 1.5.

7. A method according to any one of the preceding claims, wherein the anode catalyst means comprise a platinum/ruthenium catalyst.

8. A method according to any one of the preceding claims, wherein the acid-doped PBI has a proton conductivity of at least 10⁻³ S cm⁻¹ at 150 ºC and at a relative humidity of 5%.

9. A method according to any one of the preceding claims, wherein the acid-doped PBI has an acid-doping level of 2 or higher.

10. A method according to any one of the preceding claims, wherein unreacted dimethyl ether is recirculated within the fuel cell system.

11. A method according to any one of the preceding claims, wherein waste heat of the fuel cell system is used to preheat and/or vaporise water and/or dimethyl ether for the humidified fuel stream.

12. A method according to any one of the preceding claims, wherein the humidified fuel stream is supplied at a gauge pressure of 0 - 50 kPag.

13. A method according to any one of the preceding claims wherein the polymeric material comprises at least 90% w/w of acid-doped polybenzimidazole.

## Patentansprüche

1. Ein Verfahren zum Betreiben einer Brennstoffzelle umfassend ein oder mehr Brennstoffzellen des Typs, der eine Kathode und eine Anode umfasst, die jeweils Katalysatormittel umfassen, und eine Protonenaustauschmembran, wobei die Membran aus einem polymeren Material umfassend säuredotiertes Polybenzimidazol (PBI), das Verfahren umfassend
- Einstellen der Betriebstemperatur der Brennstoffzelle auf zwischen 120 und 250°C,
- Zuführen eines Oxidationsmittelstroms zur Kathode, und
- Zuführen eines befeuchteten Brennstoffstroms zur Anode, jener Brennstoffstrom umfassend Dimethylether, wobei Dimethylether direkt an der Anode oxidiert wird, wobei der befeuchtete Brennstoffstrom ein gasförmiges Gemisch, bestehend aus Wasser und Dimethylether, ist,
und wobei der Brennstofffluss Wasser und Dimethylether in einem molaren Verhältnis von zwischen 3,5 und 7,5 enthält.

2. Ein Verfahren entsprechend Anspruch 1, wobei die Säure Phosphorsäure ist.

3. Ein Verfahren entsprechend irgendeinem der vorhergehenden Ansprüche, wobei das polymere Material aus 50-90% w/w säuredotiertem PBI und 10-50% w/w eines sulfonierten sauren Polymers besteht.

4. Ein Verfahren entsprechend irgendeinem der vorhergehenden Ansprüche, wobei die Betriebstemperatur zwischen 120 und 200°C ist.

5. Ein Verfahren entsprechend irgendeinem der vorhergehenden Ansprüche, wobei die Betriebstemperatur über 125 und unter 150°C ist.

6. Ein Verfahren entsprechend irgendeinem der vorhergehenden Ansprüche, wobei die Strömungsgeschwindigkeit des Oxidationsmittelstroms und des Brennstoffstroms so eingestellt sind, dass sie ein Äquivalenzverhältnis von zwischen 1,1 und 1,5 erzeugen.

7. Ein Verfahren entsprechend irgendeinem der vorhergehenden Ansprüche, wobei die Anodenkatalysatormittel einen Platin/Ruthenium-Katalysator umfassen.

8. Ein Verfahren entsprechend irgendeinem der vorhergehenden Ansprüche, wobei das säuredotierte PBI eine Protonenleitfähigkeit von mindestens 10⁻³ S cm⁻¹ bei 150°C und eine relative Feuchtigkeit von 5% hat.

9. Ein Verfahren entsprechend irgendeinem der vorhergehenden Ansprüche, wobei das säuredotierte PBI eine Säuredotierung von 2 oder höher hat.

10. Ein Verfahren entsprechend irgendeinem der vorhergehenden Ansprüche, wobei nicht umgesetzter Dimethylether innerhalb des Brennstoffzellsystems zurückgeführt wird.

11. Ein Verfahren entsprechend irgendeinem der vorhergehenden Ansprüche, wobei Abwärme der Brennstoffzelle verwendet wird, um Wasser und/oder Dimethylether für den befeuchteten Brennstoffstrom vorzuwärmen und/oder zu verdampfen.

12. Ein Verfahren entsprechend irgendeinem der vorhergehenden Ansprüche, wobei der befeuchtete Brennstoffstrom bei einem Relativdruck von 0 - 50 kPag zugeführt wird.

13. Ein Verfahren entsprechend irgendeinem der vorhergehenden Ansprüche, wobei das polymere Material mindestens 90% w/w eines säuredotierten Polybenzimidazols umfasst.

## Revendications

1. Procédé de fonctionnement d'un système de pile à combustible comprenant une ou plusieurs piles à combustible du type comprenant une cathode et une anode comprenant chacune un moyen catalytique, et une membrane échangeuse de protons, dans lequel la membrane se compose d'une matière polymère comprenant un polybenzimidazole (PBI) dopé à l'acide, le procédé consistant à
- ajuster la température de fonctionnement de la pile à combustible entre 120 et 250 °C,
- fournir un courant d'oxydant à la cathode, et
- fournir un courant de combustible humidifié à l'anode, ledit courant de combustible comprenant un éther diméthylique, l'éther diméthylique étant directement oxydé sur l'anode, le courant de combustible humidifié étant un mélange gazeux se composant d'eau et d'éther diméthylique,
et le courant de combustible contenant de l'eau et de l'éther diméthylique selon un rapport molaire compris dans la plage allant de 3,5 à 7,5.

2. Procédé selon la revendication 1, dans lequel l'acide est l'acide phosphorique.

3. Procédé selon l'une quelconque des revendications précédentes, dans lequel la matière polymère se compose de 50 à 90 % m/m de PBI dopé à l'acide et de 10 à 50 % m/m d'un polymère acide sulfoné.

4. Procédé selon l'une quelconque des revendications précédentes, dans lequel la température de fonctionnement est comprise entre 120 et 200 °C.

5. Procédé selon l'une quelconque des revendications précédentes, dans lequel la température de fonctionnement est supérieure à 125 °C et inférieure à 150 °C.

6. Procédé selon l'une quelconque des revendications précédentes, dans lequel les débits du courant d'oxydant et du courant de combustible sont ajustés pour créer un rapport d'équivalence compris entre 1,1 et 1,5.

7. Procédé selon l'une quelconque des revendications précédentes, dans lequel le moyen catalytique de l'anode comprend un catalyseur de platine/ruthénium.

8. Procédé selon l'une quelconque des revendications précédentes, dans lequel le PBI dopé à l'acide a une conductivité protonique d'au moins 10⁻³ S.cm⁻¹ à 150 °C et à une humidité relative de 5%.

9. Procédé selon l'une quelconque des revendications précédentes, dans lequel le PBI dopé à l'acide a un taux de dopage à l'acide supérieur ou égal à 2.

10. Procédé selon l'une quelconque des revendications précédentes, dans lequel l'éther diméthylique n'ayant pas réagi est remis en circulation dans le système de pile à combustible.

11. Procédé selon l'une quelconque des revendications précédentes, dans lequel la chaleur perdue par le système de pile à combustible est utilisée pour préchauffer et/ou vaporiser l'eau et/ou l'éther diméthylique pour le courant de combustible humidifié.

12. Procédé selon l'une quelconque des revendications précédentes, dans lequel le courant de combustible humidifié est fourni à une pression manométrique de 0 à 50 kPag.

13. Procédé selon l'une quelconque des revendications précédentes, dans lequel la matière polymère comprend au moins 90 % m/m de polybenzimidazole dopé à l'acide.
